# EUROPEAN PATENT APPLICATION

(11) **EP 4 614 774 A1**
(43) Date of publication of application: **10.09.2025**
(21) Application number: 23885327.9
(22) Date of filing: 09.08.2023
(51) Int. Cl.: H02K 3/34

(54) **ROTARY ELECTRICAL MACHINE AND INDUSTRIAL MACHINE**

(30) Priority: 31.10.2022 JP 2022174088
(71) Applicant: Hitachi, Ltd., Tokyo 100-8280 (JP); Hitachi Industrial Equipment Systems Co., Ltd., Tokyo 101-0021 (JP)
(72) Inventor: HASEGAWA, Yu, Tokyo 100-8280 (JP); ENOMOTO, Yuji, Tokyo 100-8280 (JP); TOKOI, Hirooki, Tokyo 100-8280 (JP); IKEDA, Kenji, Tokyo 100-8280 (JP); MIKAMI, Hiroyuki, Tokyo 101-0021 (JP)
(74) Representative: MERH-IP Matias Erny Reichl Hoffmann Patentanwälte PartG mbB
(86) International application number: PCT/JP2023/029042
(87) International publication number: WO 2024/095555

(57) **Abstract**

There included are a rotor (3), a stator core (21) having a plurality of slots (21c) between the rotor (3) and a back yoke (21a), resin bobbins (22) each of which includes a plurality of coil insertion holes (22a) arranged along a radial direction of the stator core (21) and is fit into the slot (21c), and a first gap hole (22ca) provided to a side wall (22c) that is closest to the back yoke (21a) among side walls of the bobbin (22).

## Description

### Technical Field

The present invention relates to a rotary electrical machine and an industrial machine.

### Background Art

There has been developed a rotary electrical machine having a winding occupancy rate of a stator increased by using segment coils which use a rectangular wire in a flat shape in a cross section as a conductor line, thereby achieving a high output density and downsizing. In a rotary electrical machine according to Patent Document 1, divided segment coils are fit into a plurality of coil insertion holes formed in each of bobbins provided to slots of a stator, thereby achieving further downsizing, high productivity, and cost reduction.

### Prior Art Document

### Patent Document

Patent Document 1: JP-2021-126031-A

### Summary of the Invention

### Problem to be Solved by the Invention

In the rotary electrical machine as described in Patent Document 1, there is such a tendency that when a distance between the segment coil in the bobbin and a back yoke of the stator is relatively short, an inductance increases, and hence a controllability of the rotary electrical machine decreases and when the distance is relatively long, the inductance decreases, and hence the controllability increases. For example, when a thickness of a side wall of the bobbin between a back core and the segment coil is locally increased, this distance can be secured and hence the decrease in controllability can be suppressed.

However, when the thickness of the side wall of the bobbin is locally increased, resin stagnates in a portion of this thick wall at the time of resin molding of the bobbin, the resin unlikely reaches other portions having thin sidewalls, for example, partition wall portions of the bobbin each of which separates two of the segment coils next to each other, and hence there increases such a possibility that defective molding such as a crack and weld line occurs in the bobbin.

### Means for Solving the Problem

In order to solve the problem described above, the present invention includes a rotor, a stator core that includes a plurality of slots between the rotor and a back yoke, resin bobbins each of which includes a plurality of coil insertion holes arranged along a radial direction of the stator core and is fit into a slot, and a first gap hole provided to a back-yoke-side side wall that is a side wall closest to the back yoke among side walls of the bobbin.

### Advantages of the Invention

According to the present invention, a decrease in controllability of a rotary electrical machine can be suppressed and defective molding of a bobbin can be suppressed. Purposes, configurations, and effects other than the description given above become apparent from the following description of embodiments.

### Brief Description of the Drawings

FIG. 1 is a cross sectional perspective view for illustrating a schematic structure of a rotary electrical machine according to a first embodiment of the present invention.
FIG. 2 is a transverse cross-sectional view of the rotary electrical machine according to the first embodiment of the present invention.
FIG. 3 is a partial enlarged view of the transverse cross section of the rotary electrical machine according to the first embodiment of the present invention.
FIG. 4 is a schematic view for illustrating magnetic circuits generated around armature windings inserted into a plurality of coil insertion holes provided to a bobbin according to a comparative example.
FIG. 5 is a magnetic circuit diagram in which the magnetic circuit generated around the armature winding of the rotary electrical machine according to the comparative example is expressed by concentrated constants.
FIG. 6 is a magnetic circuit diagram in which the magnetic circuit generated around the other armature winding of the rotary electrical machine according to the comparative example is expressed by concentrated constants.
FIG. 7 is a schematic view for illustrating magnetic circuits generated around the armature windings inserted into the plurality of coil insertion holes provided to the bobbin according to the first embodiment of the present invention.
FIG. 8 is a magnetic circuit diagram in which the magnetic circuit generated around the armature winding of the rotary electrical machine according to the first embodiment of the present invention is expressed as the concentrated constants.
FIG. 9 is a magnetic circuit diagram in which the magnetic circuit generated around the other armature winding of the rotary electrical machine according to the first embodiment of the present invention is expressed as the concentrated constants.
FIG. 10 is a partial enlarged view of the transverse cross section of a rotary electrical machine according to a second embodiment of the present invention.
FIG. 11 is a partial enlarged view of the transverse cross section of a rotary electrical machine according to a third embodiment of the present invention.
FIG. 12 is a partial enlarged view of the transverse cross section of a rotary electrical machine according to a fourth embodiment of the present invention.

### Modes for Carrying Out the Invention

A description is now given of configurations and operations of rotary electrical machines according to a first embodiment to a fourth embodiment of the present invention with reference to drawings. Note that the same reference character indicates the same portion in each drawing.

### (First Embodiment)

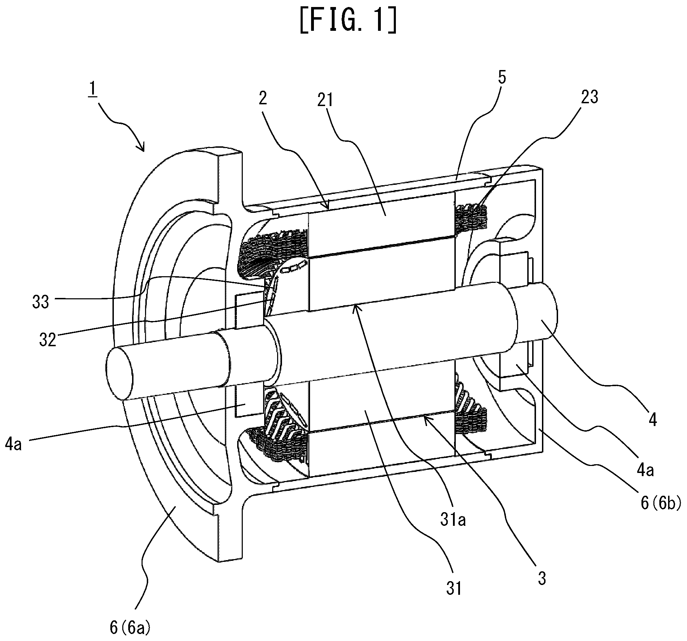

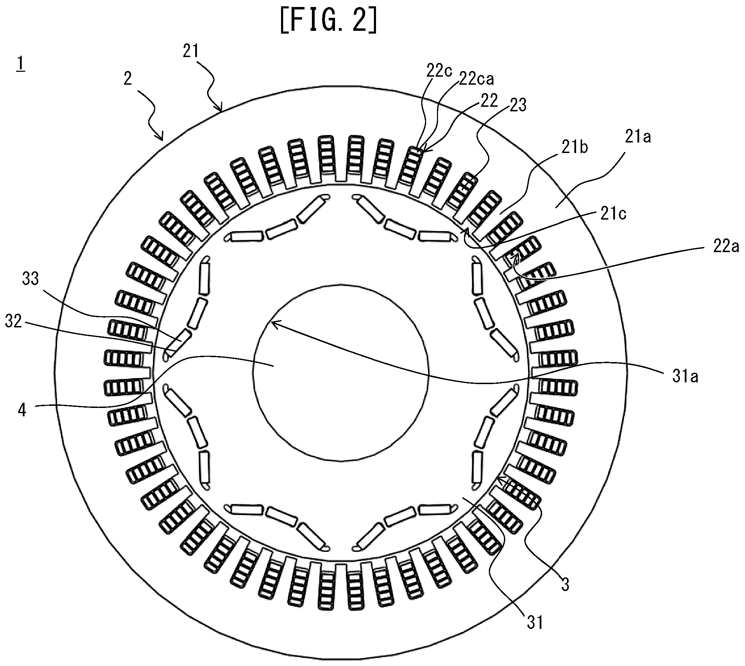

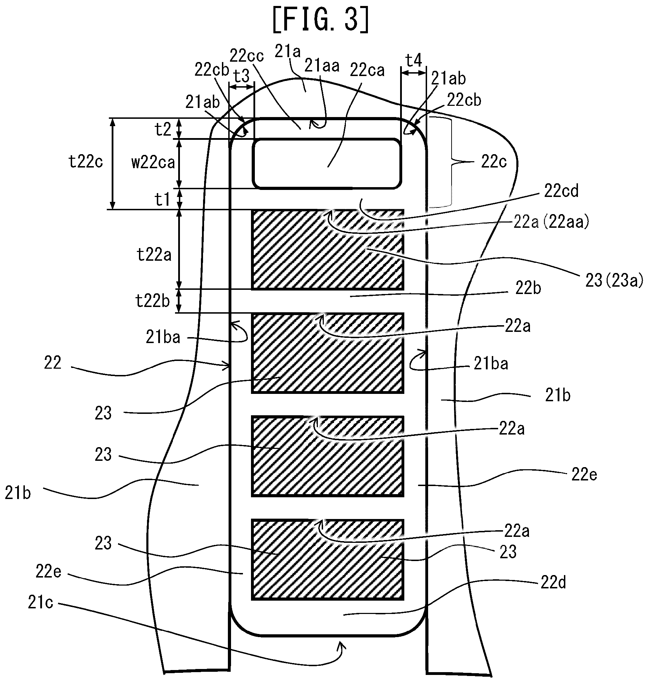

FIG. 1 is a cross sectional perspective view for illustrating an overview of a structure of a rotary electrical machine 1 according to a first embodiment of the present invention, FIG. 2 is a transverse cross-sectional view of the rotary electrical machine 1 according to the first embodiment of the present invention, and FIG. 3 is a partial enlarged view of the transverse cross section of the rotary electrical machine 1 according to the first embodiment of the present invention.

The rotary electrical machine 1 is, for example, a distributed-winding inner-rotor type permanent magnet synchronous motor, and can be used as an electric motor which is a power source of an industrial machine, for example, a compressor.

As illustrated in FIG. 1, to the rotary electrical machine 1, a stator 2, a rotor 3, a shaft 4, a housing 5, and end brackets 6 are provided.

The stator 2 is a component which generates a magnetic force through use of electric power supplied from a power supply, thereby rotating the rotor 3 opposing over a gap and includes a stator core 21, a plurality of bobbins 22 (see FIG. 2 and FIG. 3), and a plurality of armature windings 23.

The rotor 3 is a portion rotated by the magnetic force generated from the stator 2. To the rotor 3, a rotor core 31 formed of a plurality of laminated sheets, a plurality of magnet insertion holes 32 formed in the rotor core 31, and a plurality of permanent magnets 33 accommodated in the plurality of magnet insertion holes 32.

A through hole 31a is provided at a center of the rotor core 31 and the shaft 4 is fixed to the through hole 31a through press fit or the like. Moreover, as the permanent magnet 33, for example, a ferrite magnet, a neodymium magnet, or a samarium-cobalt magnet may be used and, as a shape of the permanent magnet 33, for example, a square type or a segment (C) type may be used. Moreover, it is preferred that one magnet be inserted into the magnet insertion hole 32.

The shaft 4 is an input/output shaft which rotates together with the rotor 3 and is rotationally supported by bearings 4a each fit to each of the end brackets 6. Moreover, the stator core 21 is fit to the housing 5 and the housing 5 is a cylindrical member which covers and protects the stator 2.

The end brackets 6 are mounted to both sides of the housing 5 in an axial direction and are members each in a disk shape which closes both ends of the housing 5 in the axial direction. The end brackets 6 include a first end bracket 6a from a center of which the shaft 4 protrudes and which is provided with a flange, and a second end bracket 6b from which the shaft 4 does not protrude and is not provided with a flange. By closing both ends of the housing 5 with the first end bracket 6a and the second end bracket 6b, the stator 2 and the rotor 3 are sealed and protected.

The rotary electrical machine 1 configured as described above serves as a motor having the shaft 4 as the output shaft when electric power is supplied to the stator 2, and servers as a generator when the shaft 4 is used as the input shaft and rotational power is supplied.

A detailed description is now given of the stator core 21 according to the present embodiment. As illustrated in FIG. 2, to the stator core 21, a toroidal back yoke 21a and a plurality (forty-eight in the present embodiment) of teeth 21b which protrude from an inner circumferential side of the back yoke 21a toward a center axis of the back yoke 21a are provided. In the stator core 21, the plurality of teeth 21b are positioned between the back yoke 21a and the rotor 3 and oppose the rotor 3. The stator core 21 is formed into a cylindrical shape by laminating steel sheets provided with the back yoke 21a and the plurality of teeth 21b.

Between two teeth 21b next to each other among the plurality of teeth 21b, a core groove (slot) 21c to which the armature windings 23 is inserted is formed. Thus, the stator 2 includes a plurality of the slots 21c between the rotor 3 and the back yoke 21a.

Moreover, as illustrated in FIG. 3, a cross sectional shape of the tooth 21b may be formed into a shape which tapers toward the center direction of the stator core 21 such that a cross sectional shape of the slot 21c is rectangular. Moreover, it is preferred that the stator core 21 have a curved surface at a joined portion 21ab between a side surface of each of the two teeth 21b and an inside surface of the back yoke 21a surrounding the slot 21c.

The bobbin 22 is a dielectric, is manufactured by molding resin, is fit to the slot 21c, and includes a plurality of (four in the present embodiment) coil insertion holes 22a disposed along a radial direction of the stator core 21. The plurality of armature windings 23 and the stator core 21 (the back yoke 21a and the teeth 21b) are insulated from each other by the bobbin 22.

As illustrated in FIG. 3, to the bobbin 22, the plurality of coil insertion holes 22a and a plurality of side walls (a plurality of partition walls 22b, a back-yoke-side side wall 22c, a slot-opening-side side wall 22d, and two teeth-side side walls 22e) are provided.

Each of the plurality of (three in the present embodiment) partition walls 22b is an insulating wall which is positioned between two coil insertion holes 22a next to each other among the plurality of coil insertion holes 22a, and suppresses a short circuit between the armature windings 23 inserted into the plurality of coil insertion holes 22a.

As illustrated in FIG. 3, the back-yoke-side side wall 22c is a side wall closest to the back yoke 21a among the plurality of side walls of the bobbin 22, and suppresses a short circuit between the back yoke 21a and the armature winding 23. A first gap hole 22ca is provided to the back-yoke-side side wall 22c.

Note that, it is preferred that the first gap hole 22ca be a through hole which passes through in the axial direction of the stator core 21. Moreover, it is preferred that a thickness t22c of the back-yoke-side side wall 22c be thicker than a thickness t22b of the partition walls 22b. Further, it is preferred that resin be injected into the first gap hole 22ca.

It is preferred that a width w22ca of the first gap hole 22ca in the radial direction of the stator core 21 be larger than the thickness t22b of each of the partition walls 22b. Moreover, it is preferred that a resin thickness t1 between the first gap hole 22ca and a coil insertion hole 22aa that is closest to the first gap hole 22ca among the plurality of coil insertion holes 22a be substantially the same as the thickness t22b of the partition wall 22b.

Further, it is preferred that the resin thicknesses t1 to t4 around the first gap hole 22ca be substantially the same as the thickness t22b of the partition wall. In addition, it is preferred that the width w22ca of the first gap hole 22ca in the radial direction of the stator core 21 be narrower than the width t22a of each of the plurality of coil insertion holes 22a in the radial direction of the stator core 21.

Note that it is preferred that round chamfering along the round surface of the joined portion 21ab be applied to a corner 22cb of the back-yoke-side side wall 22c opposing the joined portion 21ab formed in the slot 21c.

The slot-opening-side side wall 22d is a side wall closest to the opening of the slot 21c among the side walls of the bobbin 22. The two teeth-side side walls 22e are positioned between the plurality of coil insertion holes 22a and the teeth 21b, and are insulating walls which suppress a short circuit between the armature winding 23 inserted into each of the plurality of coil insertion holes 22a and the teeth 21b.

As a material of the bobbin 22, for example, resin such as a liquid crystalline resin, a PPS resin, a POE resin, an aramid resin, a polyimide resin, a polyester resin, a PE resin, a PP resin, and an epoxy resin can be used and two types may be combined and used. Moreover, fillers such as an inorganic filler, an organic filler, an inorganic fiber, and an organic fiber may be mixed and used.

The armature winding 23 is, for example, a rectangular wire in a flat shape in a cross section, is inserted into each of the plurality of coil insertion holes 22a, and is wound around the plurality of teeth 21b by, for example, a distributed-winding method.

### (Actions/Effects)

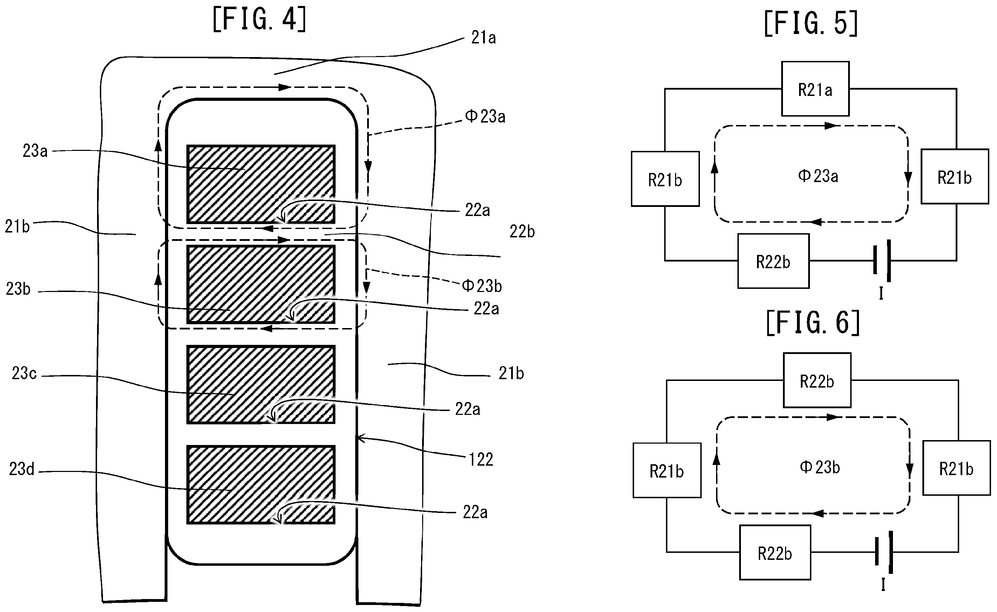

FIG. 4 is a schematic view for illustrating magnetic circuits generated around armature windings 23 inserted into the plurality of coil insertion holes 22a provided to a bobbin 122 according to a comparative example.

When a current flows through an armature winding 23a, a magnetic flux Φ23a having a magnetic path illustrated in FIG. 4 is generated around the armature winding 23a, and when a current flows through an armature winding 23b, a magnetic flux Φ23b having a magnetic path illustrated in FIG. 4 is generated around the armature winding 23b.

FIG. 5 is a magnetic circuit diagram in which the magnetic circuit generated around the armature winding 23a of a rotary electrical machine according to the comparative example is expressed by concentrated constants. As illustrated in FIG. 5, the magnetic circuit around the armature winding 23a includes a magnetic resistance R21a on the back yoke 21a side, magnetic resistances R21b on the teeth 21b sides, and a magnetic resistance R22b on the partition wall 22b side. The magnetic flux Φ23a is given by: $Φ 23 a = I / \left(R21a+R21b\times 2+R22b\right)$ where I is a magnetomotive force of the armature winding 23a.

FIG. 6 is a magnetic circuit diagram in which the magnetic circuit generated around the armature winding 23b of the rotary electrical machine according to the comparative example is expressed by concentrated constants. As illustrated in FIG. 6, the magnetic circuit around the armature winding 23b includes the magnetic resistances R21b on the teeth 21b sides and the magnetic resistances R22b on the partition wall 22b sides. The magnetic flux Φ23b is given by: $Φ 23 b = I / \left(\left(R21b+R22b\right)\times 2\right)$ where I is a magnetomotive force of the armature winding 23b.

In this configuration, the back yoke 21a and the teeth 21b, which are formed of a magnetic substance, serve as the magnetic path, and hence the magnetic resistance R21a and the magnetic resistance R21b are substantially equivalent. Meanwhile, the partition wall 22b, which is formed of a non-magnetic substance, serves as the magnetic path, and hence the magnetic resistance R22b is substantially equivalent to the air. Thus, the magnetic resistance R22b is 100 times to 10,000 times as large as the magnetic resistance R21a and the magnetic resistance R21b, and hence the magnetic flux Φ23a is larger than the magnetic flux Φ23b. However, a magnetic flux out of the magnetic flux Φ23a, which passes through the back yoke 21a, does not interlink the rotor 3, and hence is an ineffective magnetic flux which does not contribute to a rotational torque of the rotor 3.

Meanwhile, when the rotary electrical machine 1 according to the present embodiment is synchronously driven as a permanent magnet synchronous motor, a positional relationship between the plurality of permanent magnets 33 of the rotor 3 and the plurality of teeth 21b of the stator 2 continuously changes, and hence the magnetic circuits in the motor vary. When magnetic saturation occurs in the teeth at the time of the variation of the magnetic circuits, an inductance nonlinearly varies, and hence the currents flowing through the armature windings pulsate. When the pulsation of the currents exceeds a control range of the control device, the pulsation becomes apparent, and hence controllability of the motor decreases. That is, when the inductance of the armature windings is large, a variation amount of the current pulsation due to the magnetic saturation becomes large, and hence the controllability of the motor decreases.

Meanwhile, when the inductances can be reduced, it is possible to reduce a load angle, which is a phase difference between a terminal voltage and a non-load induction magnetomotive force. Thus, for example, an effective load range can be increased when sensorless control is executed, and hence the controllability of the motor can be increased.

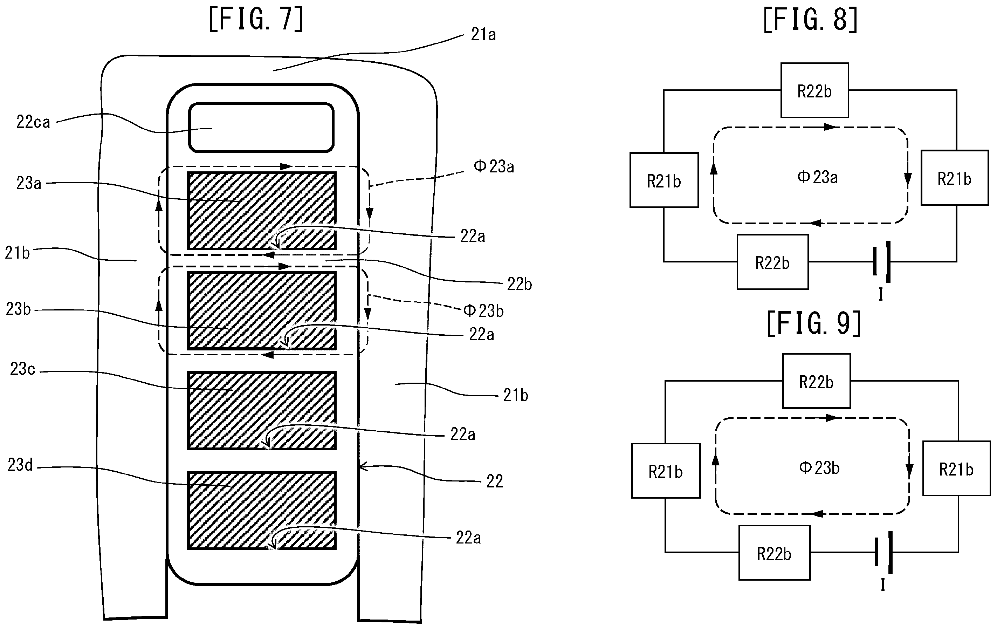

FIG. 7 is a schematic view for illustrating magnetic circuits generated around the armature windings 23 inserted into the plurality of coil insertion holes 22a provided to the bobbin 22 according to the present invention. When the current flows through the armature winding 23a, the magnetic flux Φ23a having a magnetic path illustrated in FIG. 7 is generated around the armature winding 23a, and when the current flows through the armature winding 23b, the magnetic flux Φ23b having the magnetic path illustrated in FIG. 7 is generated around the armature winding 23b.

FIG. 8 is a magnetic circuit diagram in which the magnetic circuit generated around the armature winding 23a of the rotary electrical machine 1 according to the present embodiment is expressed by concentrated constants. As illustrated in FIG. 8, the magnetic circuit around the armature winding 23a includes the magnetic resistances R21b on the teeth 21b sides and the magnetic resistances R22b on the partition wall 22b sides.

The magnetic flux Φ23a is given by: $Φ 23 a = I / \left(\left(R21b+R22b\right)\times 2\right)$ where I is the magnetomotive force of the armature winding 23a.

FIG. 9 is a magnetic circuit diagram in which the magnetic circuit generated around the armature winding 23b of the rotary electrical machine 1 according to the present embodiment is expressed as the concentrated constants. As illustrated in FIG. 9, the magnetic circuit around the armature winding 23b includes the magnetic resistances R21b on the teeth 21b sides and the magnetic resistances R22b on the partition wall 22b sides. The magnetic flux Φ23b is given by: $Φ 23 b = I / \left(\left(R21b+R22b\right)\times 2\right)$ where I is the magnetomotive force of the armature winding 23b.

In this configuration, the magnetic resistance R21a on the back yoke 21a aide is not included in the magnetic circuit generated around the armature winding 23a of the rotary electrical machine 1 according to the present embodiment, and the magnetic flux Φ23a is therefore substantially equivalent to the magnetic flux Φ23b.

Meanwhile, the magnitude of a magnetic flux Φ corresponding to the magnetomotive force I indicates the inductance of the armature winding 23, and hence, in the rotary electrical machine 1 according to the present embodiment, the inductance can be reduced as compared with the rotary electrical machine according to the comparative example.

In the bobbin 22, the coil insertion hole 22aa closest to the back yoke 21a among the plurality of coil insertion holes 22a disposed along the radial direction of the stator core 21 can be distanced from the back yoke 21a by the first gap hole 22ca. With this configuration, it is possible to exclude the magnetic resistance R21a on the back yoke 21a side from the magnetic circuit around the armature winding 23a inserted into the coil insertion hole 22aa as from the magnetic circuits around the armature windings 23 inserted into other coil insertion holes 22a. Thus, a magnetic flux Φ1 is reduced, hence the inductance decreases, and the controllability of the motor can be increased. Thus, the controllability of the motor can be increased by distancing the armature winding 23 from the back yoke 21a.

That is, the rotary electrical machine 1 according to the present embodiment includes the rotor 3, the stator core 21 that includes the plurality of slots 21c between the rotor 3 and the back yoke 21a, the resin bobbins 22 each of which includes the plurality of coil insertion holes 22a arranged along the radial direction of the stator core 21 and is fit into the slot 21c, and the first gap hole 22ca provided to the back-yoke-side side wall 22c that is the side wall closest to the back yoke 21a among the side walls of the bobbin 22.

When the first gap hole 22ca is provided to the back-yoke-side side wall 22c which is the side wall of the bobbin 22 closest to the back yoke 21a, the distance between the armature winding 23a and the back yoke 21a can be secured. Thus, the increase in inductance can be suppressed, and hence the controllability of the rotary electrical machine 1 can be increased.

Further, by providing the first gap hole 22ca, it is possible to suppress the extreme increase in the resin thicknesses t1 to t4 of the back-yoke-side side walls 22c compared with the resin thicknesses of the side walls of other portions. With this configuration, it is possible to suppress local stagnation of the resin at the time of resin molding of the bobbin 22, and hence it is also possible to suppress the occurrence of defective molding of the bobbin 22. That is, with the rotary electrical machine 1 according to the present embodiment, the decrease in controllability of the rotary electrical machine 1 can be suppressed, and the defective molding of the bobbin 22 can be suppressed.

Moreover, in the bobbin 22 according to the present embodiment, it is preferred that the first gap hole 22ca provided to the back-yoke-side side wall 22c be a through hole which passes through the back-yoke-side side wall 22c in the axial direction of the stator core 21. With this configuration, the molding of the first gap hole 22ca becomes easy, and nonuniformity of a resin pressure at the time of the resin molding of the bobbin 22 can be suppressed, thereby being able to suppress the occurrence of the defective molding such as a crack.

Moreover, in the bobbin 22 according to the present embodiment, it is preferred that the back-yoke-side side wall 22c be thicker than the partition walls 22b each positioned between the two coil insertion holes 22a next to each other among the plurality of coil insertion holes 22a. With this configuration, the inductance can be reduced as compared with the case in which the thickness t22c of the back-yoke-side side wall 22c is equal to or thinner than the thickness t22b of each of the partition walls 22b, and hence the controllability of the motor can be increased.

Moreover, it is preferred that the width w22ca of the first gap hole 22ca in the radial direction of the stator core 21 according to the present embodiment be thicker than the thickness t22b of each of the partition walls 22b. With this configuration, the thickness t22c of the back-yoke-side side wall 22c in the radial direction of the stator core 21 is thicker than the thickness t22b of the partition walls 22b, and the resin thicknesses t1 to t4 around the first gap hole 22ca can be formed to be thin. Thus, the inductance is reduced, thereby being able to suppress the decrease in the controllability of the rotary electrical machine 1, and the resin thicknesses t1 to t4 around the first gap hole 22ca are formed to be thin, thereby being able to suppress the molding defect of the bobbin 22.

Moreover, it is preferred that the resin thickness t1 between the first gap hole 22ca according to the present embodiment and the coil insertion hole 22aa that is closest to the first gap hole 22ca among the plurality of coil insertion holes 22a be substantially the same as the thickness t22b of the partition wall 22b. With this configuration, the nonuniformity of the resin pressure at the time of resin molding of the bobbin can be suppressed, thereby being able to further suppress the occurrence of the defective molding such as the crack.

Further, it is preferred that the resin thicknesses t1 to t4 around the first gap hole 22ca in the present embodiment be substantially the same as the thickness t22b of the partition wall 22b. With this configuration, it is possible to suppress the nonuniformity of the resin pressure at the time of the resin molding of the bobbin, and hence it is possible to further suppress the occurrence of the defective molding such as the crack.

Moreover, it is preferred that the width w22ca of the first gap hole 22ca in the radial direction of the stator core 21 according to the present embodiment be narrower than the width t22a of each of the plurality of coil insertion holes 22a in the radial direction of the stator core 21. With this configuration, the width t22c of the back-yoke-side side wall 22c in the radial direction of the stator core 21 can be reduced, and hence a decrease in occupancy rate of the armature windings 23 wound around the teeth 21b can be suppressed.

Moreover, it is preferred that the joined portion 21ab between the side surface of each of the two teeth 21b surrounding the slot 21c and the inside surface of the back yoke 21a be a curved surface. With this configuration, the flow of the magnetic flux is promoted in the joined portion 21ab, the magnetic resistance against the interlinking magnetic flux can be reduced, and hence a magnetic loss can be reduced.

Moreover, it is preferred that resin be injected into the first gap hole 22ca of the present embodiment, and this injection of the resin can increase strength of the bobbin 22.

### (Second Embodiment)

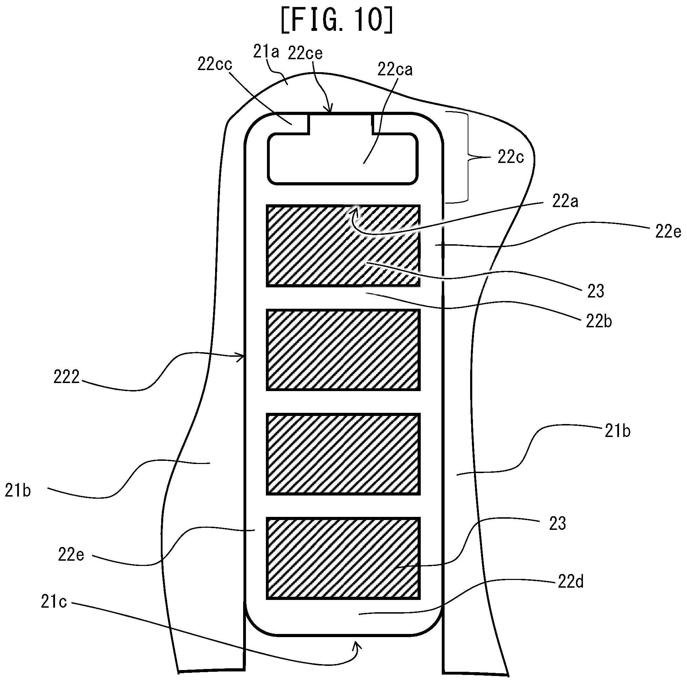

FIG. 10 is a partial enlarged view of the transverse cross section of the rotary electrical machine according to the second embodiment of the present invention. The present embodiment is different from the first embodiment in such a point that a back-yoke-side opening portion 22ce, which is a slit extending in the axial direction of the stator core 21, is provided to the resin wall 22cc between the first gap hole 22ca and the back yoke 21a.

With this configuration, in a mold used for the resin molding of a bobbin 222, a through-hole-molding protruding portion provided to the mold for molding the first gap hole 22ca is connected to an outside wall of the mold via a mold portion for molding the back-yoke-side opening portion 22ce. Thus, a deflection and oscillation occurring at the through-hole-molding protruding portion due to the pressure of the resin injected into the mold in the injection molding of the bobbin 222 is suppressed, and hence the molding defect can be suppressed.

Note that it is preferred that the back-yoke-side opening portion 22ce be provided only to a part of the stator core 21 in the axial direction in order to prevent a decrease in strength of the resin wall 22cc. In this case, it is preferred that the mold portion for molding the back-yoke-side opening portion 22ce be provided on a distal end side of the through-hole-molding protruding portion in order to efficiently suppressing the deflection and the vibration occurring at the through-hole-molding protruding portion of the mold. Thus, it is preferred that the back-yoke-side opening portion 22ce be molded on the distal end side of the through-hole-molding protruding portion of the mold.

### (Third Embodiment)

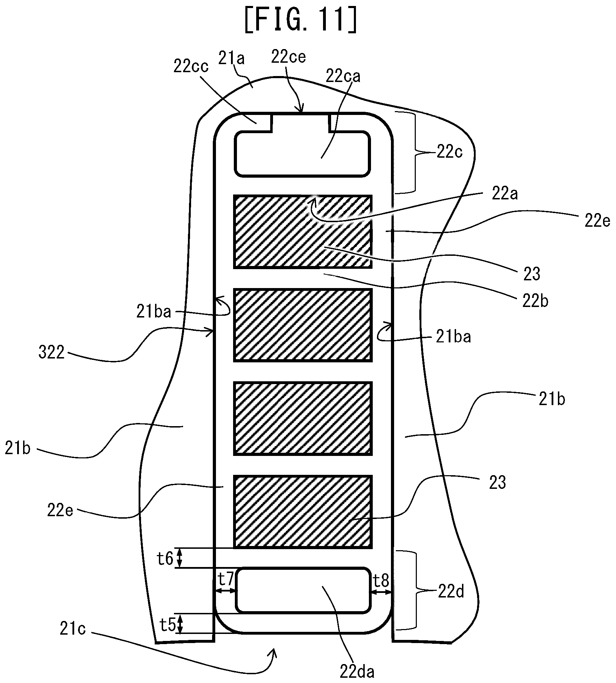

FIG. 11 is a partial enlarged view of the transverse cross section of the rotary electrical machine according to the third embodiment of the present invention. The present embodiment is different from the second embodiment in such a point that a second gap hole 22da is provided to the side wall (slot-opening-side side wall 22d) that is closest to the opening of the slot 21c among side walls of a bobbin 322.

With this configuration, since resin thicknesses t5 to t8 around the second gap hole 22da of the slot-opening-side side wall 22d become thinner, it is possible to suppress local stagnation of the resin in the slot-opening-side side wall 22d at the time of the resin molding of the bobbin 322. Thus, the occurrence of the defective molding of the bobbin 22 can further be suppressed.

Note that it is preferred that the thicknesses t5 to t8 of the resin around the second gap hole 22da be substantially the same as the thickness t22b of the partition wall 22b. With this configuration, it is possible to further suppress the nonuniformity of the resin pressure at the time of the resin molding of the bobbin 322, and hence it is possible to further suppress the occurrence of the defective molding such as the crack.

Further, it is preferred that resin be injected into the second gap hole 22da. With this configuration, the strength of the bobbin 322 can be increased.

### (Fourth Embodiment)

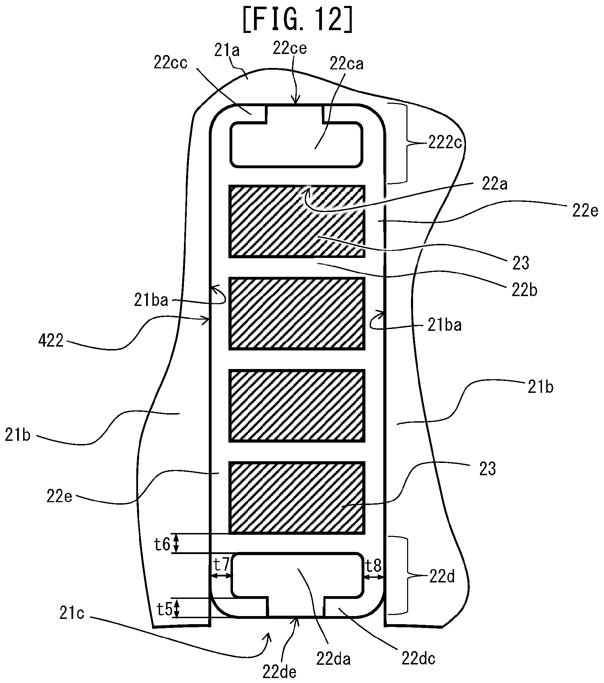

FIG. 12 is a partial enlarged view of the transverse cross section of the rotary electrical machine according to the fourth embodiment of the present invention. The present embodiment is different from the third embodiment in such a point that a slot-opening-side opening portion 22de which is a slit extending in the axial direction of the stator core 21 is provided to the resin wall 22dc between the second gap hole 22da and the opening of the slot 21c.

With this configuration, in a mold used for the resin molding of a bobbin 422, a through-hole-molding protruding portion provided to the mold for molding the second gap hole 22da is connected to an outside wall of the mold via a protruding portion for molding the slot-opening-side opening portion 22de. Thus, a deflection and oscillation occurring at the through-hole-molding protruding portion due to the pressure of the resin injected into the mold in injection molding of the bobbin 422 is suppressed, and hence the molding defect can be suppressed.

Note that, the present invention is not limited to the embodiments described above and includes various modification examples. For example, the embodiments described above are detailed for the sake of an easy-to-understand description of the present invention, and the present invention is not necessarily limited to the embodiments including all the described configurations. Moreover, a part of a configuration of a certain embodiment can be replaced by a configuration of another embodiment, and, to a configuration of a certain embodiment, a configuration of another embodiment can be added. Further, for a part of a configuration of each embodiment, addition, deletion, and replacement of another configuration can be made.

Note that the embodiment of the present invention may be the following form. In the rotary electrical machine 1 described above, the case in which the number of poles is eight poles and the number of slots is forty-eight slots is described, but the configuration is not limited to this case, the combination of the number of poles and the number of slots is optional, and combinations of, for example, four poles and forty-eight slots and two poles and twenty-four slots may be used.

Moreover, in the description given above, it is shown that, as the permanent magnet 33, the ferrite magnet, the neodymium magnet, or the samarium-cobalt magnet of the square type or the segment (C) type is used. However, the configuration is not limited to this form, and the magnet may be another magnet and may be in another shape. Moreover, the configuration is not limited to the case in which one magnet is inserted in the magnet insertion hole 32, and a plurality of the permanent magnets 33 may be inserted in the axial direction, the circumferential direction, or the radial direction of the stator 2.

Moreover, there are described the embodiments in which the cross sectional shape of the tooth 21b is formed into the shape which tapers toward the center direction of the stator core 21 such that the cross sectional shape of the slot 21c is rectangular. However, the configuration is not limited to this embodiment, for example, the cross sectional shape of the tooth 21b may be rectangular, and the cross sectional shape of the slot 21c may be a shape tapered toward the center direction of the stator core 21. Moreover, a distal end of the tooth 21b may extend in the circumferential direction of the stator core 21 and hence the cross sectional shape of the tooth 21b may be a T shape.

Moreover, in the embodiments described above, there is described the stator core 21 formed by laminating steel plates to which the back yoke 21a and the plurality of teeth 21b are integrally provided. However, the configuration is not limited to this example, the plurality of teeth 21b and the back yoke 21a may be produced as steel plates different from each other, and the plurality of laminated teeth 21b may then be assembled and fixed to laminated back yokes 21a.

Moreover, it is preferred that, as the armature winding 23, the rectangular wire be used in order to increase the winding occupancy rate, but the armature winding is not limited to this example and, for example, a round wire or a twisted wire may be used. When a round wire or a twisted wire is used as the armature winding 23, it is preferred that the shape of the coil insertion hole 22a be deformed according to a cross sectional shape of the armature winding 23. Moreover, it is preferred that, as the armature winding 23, an electric conductor having, as a main component, copper coated with, for example, an insulating film (for example, vanish or engineering plastic) be used.

### Description of Reference Characters

1: Rotary electrical machine
2: Stator
3: Rotor
21: Stator core
21a: Back yoke
21aa: Back-yoke inside surface
21ab: Joined portion
21b: Tooth
21ba: Tooth side surface
21c: Slot
22, 122, 222, 322, 422: Bobbin
22a: Coil insertion hole
22b: Partition wall
22c: Back-yoke-side side wall
22ca: First gap hole
22cc: Resin wall
22ce: Back-yoke-side opening portion
22d: Slot-opening-side side wall
22da: Second gap hole
22dc: Resin wall
22de: Slot-opening-side opening portion
23: Armature winding
31: Rotor core
31a: Through hole
32: Magnet insertion hole
33: Permanent magnet

## Claims

1. A rotary electrical machine comprising:
a rotor;
a stator core that includes a plurality of slots between the rotor and a back yoke;
resin bobbins each of which includes a plurality of coil insertion holes arranged along a radial direction of the stator core and is fit into a slot; and
a first gap hole provided to a back-yoke-side side wall that is a side wall closest to the back yoke among side walls of the bobbin.

2. The rotary electrical machine according to claim 1, wherein
the first gap hole is a through hole that passes through the back-yoke-side side wall in an axial direction of the stator core.

3. The rotary electrical machine according to claim 1, wherein
the back-yoke-side side wall is thicker than a partition wall positioned between two coil insertion holes next to each other among the plurality of coil insertion holes.

4. The rotary electrical machine according to claim 3, wherein
a width of the first gap hole in the radial direction of the stator core is larger than a thickness of the partition wall.

5. The rotary electrical machine according to claim 3, wherein
a resin thickness between the first gap hole and a coil insertion hole that is closest to the first gap hole among the plurality of coil insertion holes is substantially same as a thickness of the partition wall.

6. The rotary electrical machine according to claim 3, wherein
a resin thickness around the first gap hole is substantially same as a thickness of the partition wall.

7. The rotary electrical machine according to claim 1, wherein
a width of the first gap hole in the radial direction of the stator core is narrower than a width of each of the plurality of coil insertion holes in the radial direction of the stator core.

8. The rotary electrical machine according to claim 1, wherein
the slot is formed between two teeth next to each other among a plurality of teeth that protrude from the back yoke toward a center direction of the stator core, and
a joined portion between a side surface of each of the two teeth and an inside surface of the back yoke, the side surface and the inside surface surrounding the slot, has a curved surface.

9. The rotary electrical machine according to claim 1, wherein
resin is injected into the first gap hole.

10. The rotary electrical machine according to claim 1, wherein
a slit extending in an axial direction of the stator core is provided to a resin wall between the first gap hole and the back yoke.

11. The rotary electrical machine according to claim 1, wherein
a second gap hole is provided to a side wall that is closest to an opening of the slot among the side walls of the bobbin.

12. The rotary electrical machine according to claim 11, wherein
a thickness of resin around the second gap hole is substantially same as a thickness of a partition wall positioned between two coil insertion holes next to each other among the plurality of coil insertion holes.

13. The rotary electrical machine according to claim 11, wherein
resin is injected into the second gap hole.

14. The rotary electrical machine according to claim 11, wherein
a second opening portion that is in a slit form and extends in an axial direction of the stator core is provided to a resin wall between the second gap hole and the opening of the slot.

15. An industrial machine comprising the rotary electrical machine according to claim 1.
